# EUROPÄISCHE PATENTSCHRIFT

(11) **EP 0 448 745 B1**
(45) Veröffentlichungstag und Bekanntmachung des Hinweises auf die Patenterteilung: **24.05.1995**
(21) Anmeldenummer: 90105718.2
(22) Anmeldetag: 26.03.1990
(51) Int. Cl.: H02J 7/10, G01R 31/36

(54) **Verfahren und Schaltungsanordnung zur Überwachung einer Batterie auf ihren Betriebszustand und ihre Bereitschaft**
Method and switching layout for controlling the functionality and readiness of a battery
Méthode et système de commutation pour surveiller l'état de fonctionnement et la disponibilité d'une batterie

(43) Veröffentlichungstag der Anmeldung: 02.10.1991
(73) Patentinhaber: SIEMENS AKTIENGESELLSCHAFT, 80333 München (DE)
(72) Erfinder: Fischer, Dietmar, Dipl.-Ing., D-8520 Erlangen (DE); Mickal, Hermann. Dipl.-Ing., D-8520 Erlangen (DE)

(56) Entgegenhaltungen:
- EP-A- 0 359 237
- FR-A- 2 609 555
- GB-A- 2 116 728
- US-A- 4 820 966

## Beschreibung

Die Erfindung bezieht sich auf ein Verfahren und eine Schaltungsanordnung zur Überwachung einer aus mehreren Batteriezellen bestehenden Batterie auf ihren Betriebszustand und ihre Bereitschaft, wobei bereitgestellte Istwerte von Batteriestrom und Batteriespannung gemittelt werden und aus der Richtung des Batteriestromes die Betriebsart festgestellt wird.

Aus der GB 2 116 728 A1 ist eine Einrichtung bekannt, mit der die Ladung einer Batterie, insbesondere die Batterie eines batteriegespeisten Fahrzeuges, angezeigt werden kann. Diese Einrichtung weist einen Mikroprozessor auf, der einerseits mit einem Programmspeicher und einem Datenspeicher und andererseits mittels eines A/D-Wandlers mit einer Strom- und Spannungserfassungseinrichtung verbunden ist. Außerdem ist eine Eingabevorrichtung vorgesehen. Mittels dieser Einrichtung werden der Strom und die Entladezeit erfaßt, woraus in Abhängigkeit der Anfangsentladung der Batterie die Istladung der Batterie berechnet wird. In Abhängigkeit dieses Istladungswertes, des gemessenen Stromes, der Entladezeit und eines Entfernungswertes wird die verbleibende Reichweite des batteriegespeisten Fahrzeuges ermittelt. Ferner kann mittels des Istladungswertes der Batterie und des gemessenen Entladestromes die verbleibende Zeit ermittelt werden.

Aus der FR 2 609 555 A1 ist ein Verfahren und eine Vorrichtung zur Ermittlung der Bereitschaft einer Batterie bekannt. Die Vorrichtung weist einen Mikroprozessor auf, der mittels eines A/D-Wandlers mit einer Strommeßvorrichtung und mit einem Speicher verbunden ist. In Abhängigkeit des ermittelten Entladestromes wird der Entladezustand und in Abhängigkeit einer Zellspannung die Entladung in Prozent aus einer Tabelle bestimmt. Dann werden die Kapazitätswerte am Anfang der Entladung und am Ende der Entladung berechnet. Die Differenz dieser Werte bestimmt die verfügbare Kapazität. Der Wert dieser verfügbaren Kapazität wird durch den Wert des gemessenen Entladestromes dividiert, so daß man eine Stützzeit bzw. die Bereitschaft der Batterie erhält.

Im Handel sind Überwachungseinrichtungen erhältlich, mit denen der Betriebszustand und die Bereitschaft einer Batterie, insbesondere einer Batterie einer unterbrechungsfreien Stromversorgung, überwacht werden kann. Eine derartige Überwachungsschaltung greift in die zu überwachende Anlage nicht direkt ein. Aus den bekannten Entladekurven, die eine Batteriezelle genau genug beschreiben, können folgende Kennlinien bzw. Kennfelder gebildet und in einem Speicher einer Überwachungseinrichtung hinterlegt werden:
- Zellenspannung als Funktion der relativen entnommenen Kapazität mit Strom bzw. Entladezeit als Parameter,
- absolute entnehmbare Kapazität als Funktion des Entladestromes bzw. der Entladezeit,
- Entladeschlußspannung als Funktion des Entladestromes,
- Anfangsentladespannung als Funktion des Entladestromes,
- Ladespannung als Funktion der entnehmbaren Kapazität.

Die Art der Auswertung von Batteriespannung und Batteriestrom hängt davon ab, in welchem Betriebszustand (Laden oder Entladen) sich die Batterie befindet. Die Entscheidung, ob Lade- oder Entladebetrieb vorliegt, trifft beispielsweise ein Prozessor einer Überwachungseinrichtung anhand der Stromrichtung des Batteriestromes. Die bei den verschiedenen Betriebszuständen erfaßten Istwerte der Batterie, die dieser Überwachungseinrichtung zuführbar sind, werden mit den genannten abgespeicherten Kennlinien bzw. Kennfelder der Batteriezelle verglichen.

Da für die Auswertung der Istwerte der Batterie mehrere Kennlinien bzw. Kennfelder verwendet werden, benötigt einerseits die Überwachungseinrichtung genügend Speicherbedarf und andererseits ist das Auswerteverfahren nicht einfach.

Der Erfindung liegt nun die Aufgabe zugrunde, ein Verfahren und eine Schaltungsanordnung zur Überwachung einer Batterie auf ihren Betriebszustand und ihre Bereitschaft anzugeben, bei dem sich der Speicherplatzbdarf verringert und sich das Verfahren vereinfacht.

Diese Aufgabe wird erfindungsgemäß dadurch gelöst, daß bei Vorliegen des Entladebetriebes aus den gemittelten Istwerten von Batteriestrom und Batteriespannung eine Entladeleistung und eine auf eine Batteriezelle bezogene Entladeleistung berechnet werden, daß in Abhängigkeit dieser bezogenen Entladeleistung eine Kennlinie aus den abgespeicherten Entladeleistungs-Kennlinienscharen bestimmt wird, daß in Abhängigkeit des gemittelten Zellspannungs-Istwertes und der bestimmten Kennlinie ein Wert der von der maximalen Kapazität entnommenen Kapazität bestimmt wird, daß zur Berechnung eines Wertes der Restkapazität dieser ermittelte Wert der entnommenen Kapazität von der maximalen Kapazität subtrahiert wird und daß zur Bestimmung der Bereitschaft diese ermittelte Restkapazität als eine auf die maximale Kapazität bezogene Größe mit einer zur ermittelten Kennlinie gehörenden maximalen Entladezeit multipliziert wird.

Durch die Bildung der Entladeleistungs-Kennlinienscharen kann man mittels einer berechneten Entladeleistung den Betriebzustand einer Batterie ohne großen Aufwand ermitteln. Da die Entladeleistungs-Kennlinien jeweils für eine maximale Entladezeit gilt, steht einem aus der Kennlinienschar mittels der berechneten Entladeleistung auch die maximale Entladezeit zur Verfügung. Mittels dieser Entladezeit und des ermittelten Betriebszustandes bzw. der Restkapazität kann durch eine einfache Multiplikation die Bereitschaft bzw. die Stützzeit der Batterie angegeben werden. Da anstelle von fünf Kennfeldern nur noch ein Kennfeld und der Istwert der Entladeleistung bestimmt wird, kann mittels einfacher Rechenoperationen der Betriebszustand und die Bereitschaft einer Batterie einfach ermittelt werden.

Bei einem vorteilhaften Verfahren wird die Batterie in die Betriebsart "Entladen" versetzt und zu zwei verschiedenen Zeitpunkten wird die Bereitschaft der Batterie ermittelt, wobei eine vorbestimmte Zeitspanne zwischen zwei Zeitpunkten vorgegeben ist, und werden die beiden ermittelten Bereitschaften voneinander subtrahiert und dieser Differenzwert derart mit der vorbestimmten Zeitspanne verglichen, daß, wenn der Differenzwert außerhalb eines vorbestimmten Toleranzbereiches der Zeitspanne liegt, die Batterie als geschädigt erkannt wird. Mittels dieses vorteilhaften Verfahrens kann jederzeit die Batterie getestet werden. Als Ergebnis dieses Tests steht fest, ob die Batterie in Ordnung oder geschädigt ist. Somit besteht die Möglichkeit, vom Wartungspersonal oder mittels eines Wartungsprogramms, die Batterie in regelmäßigen Zeitabständen (Vielfaches von Betriebsstunden) zu testen, damit rechtzeitig eine geschädigte Batterie ausgetauscht werden kann.

Dieses erfindungsgemäße Verfahren kann vorteilhaft bei einer unterbrechungsfreien Stromversorgung angewendet werden, wobei die Schaltungsanordnung zur Durchführung des Verfahrens in einer Steuer- und Regeleinrichtung der unterbrechungsfreien Stromversorgung integriert ist. Die Schaltungsanordnung kann aber auch auf einem Bedienfeld einer unterbrechungsfreien Stromversorgung untergebracht sein.

Zur weiteren Erläuterung der Erfindung wird auf die Zeichnung Bezug genommen, in der eine Ausführungsform der Schaltungsanordnung zur Durchführung des Verfahrens zur Überwachung einer Batterie auf ihren Betriebszustand und ihre Bereitschaft schematisch veranschaulicht ist.
- Figur 1: zeigt ein Blockschaltbild einer unterbrechungsfreien Stromversorgung mit einer Ausführungsform der Schaltungsanordnung zur Durchführung des erfindungsgemäßen Verfahrens,
- Figur 2: veranschaulicht ein Ablaufdiagramm des Verfahrens und in den
- Figuren 3 und 4: sind Entladeleistungs-Kennlinienscharen jeweils in einem Diagramm über der Entladekapazität dargestellt.

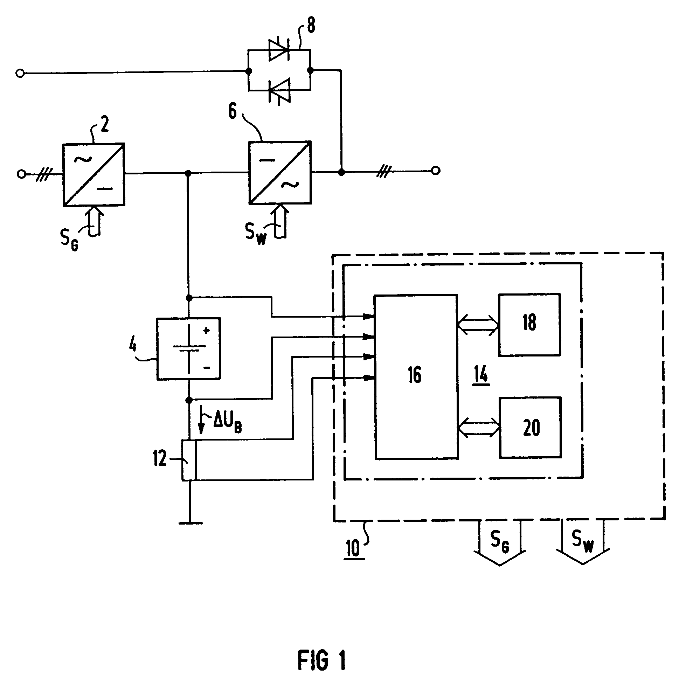

In Figur 1 ist ein Blockschaltbild einer unterbrechungsfreien Stromversorgung (USV) dargestellt. Diese unterbrechungsfreie Stromversorgung besteht aus einem Gleichrichter 2, einer Batterie 4, einem Wechselrichter 6, einer Netzrückschalteinrichtung 8 und einer Steuer- und Regelschaltung 10. Im Batteriezweig ist noch ein Gleichstrommeßgeber 12 vorhanden, mit dem ein Batteriestrom I_{B} ermittelt werden kann.

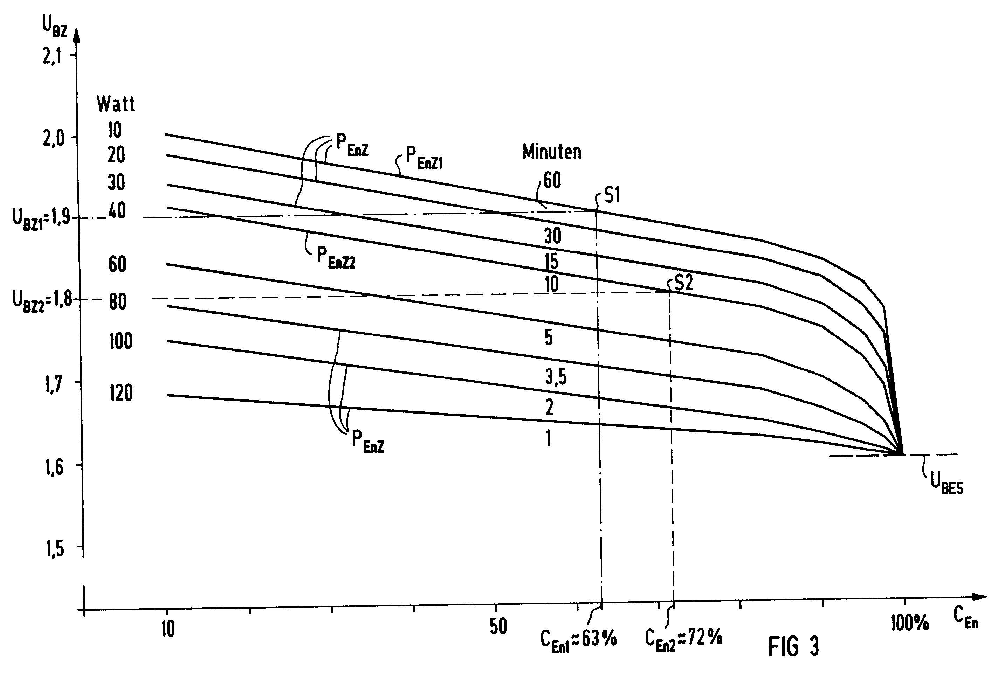

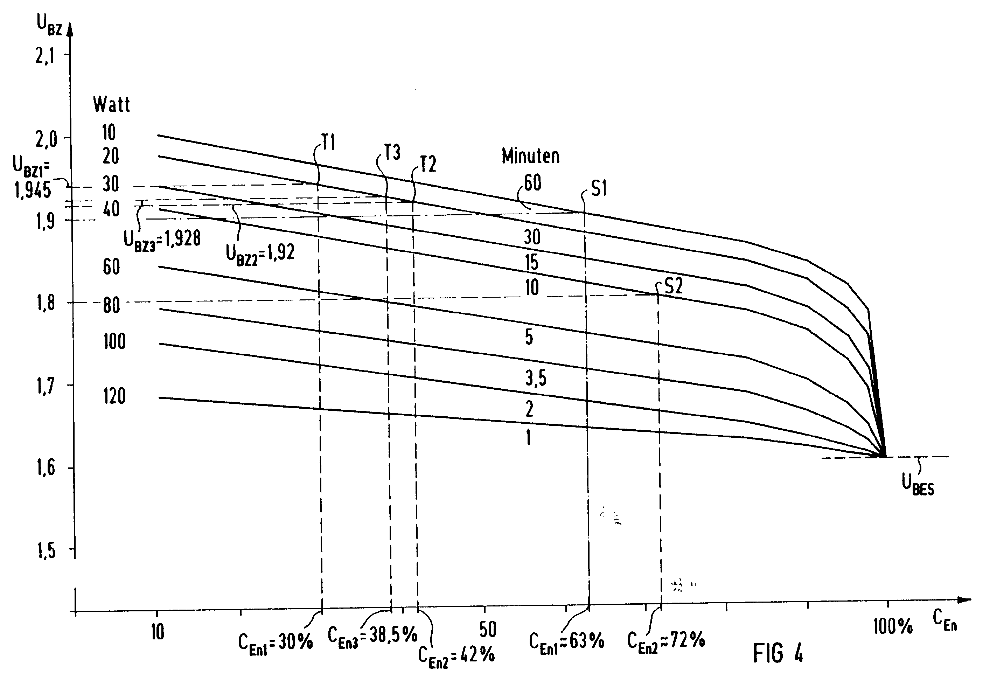

Die Steuer- und Regeleinrichtung 10 der unterbrechungsfreien Stromversorgung weist eine Schaltungsanordnung 14 zur Durchführung des Verfahrens zur Überwachung der Batterie 4 auf ihren Betriebszustand und ihre Bereitschaft auf. Diese Schaltungsanordnung 14 besteht aus einem Mikroprozessor 16, einem Speicher 18 und einer Anzeigevorrichtung 20. Im Speicher 18 sind die in Figur 3 bzw. 4 dargestellten Entladeleistungs-Kennlinienscharen hinterlegt. Mittels der Anzeigevorrichtung 20 kann der Betriebszustand (Restkapazität C_{R}) und/oder die Bereitschaft (Stützzeit t_{St}) der Batterie 4 angezeigt werden.

Damit der Betriebszustand C_{R} und die Bereitschaft t_{St} der Batterie 4 ermittelt werden kann, werden dem Mikroprozessor 16 die Istwerte von Batteriestrom I_{B} und Batteriespannung U_{B} bereitgestellt. Der Batteriestrom-Istwert I_{B} wird mittels des Gleichstrommeßgeber 12 ermittelt. Damit der Mikroprozessor 16 entscheiden kann, ob Lade- oder Entladebetrieb L_{A} bzw. Eₙ vorliegt, wird dem Mikroprozessor 16 beispielsweise ein Spannungsabfall ΔU_{B} zugeführt, dessen Vorzeichen die Stromrichtung bzw. die Betriebsart (Lade-oder Entladebetrieb) angibt. Zu Beginn des Entladebetriebes Eₙ muß ein Batteriestrom I_{B} von mindestens 3 % des Nennstromes I_{BN} wenigstens eine Sekunde im Batteriekreis fließen. Damit werden Fehlberechnungen während des Spannungsabsackens vermieden. Außerdem kann auch eine vorübergehende Lastabnahme auf Null im Entladebetrieb Eₙ nicht zu einer Falschauswertung führen.

Im Speicher 18 sind außerdem die Kenndaten von acht Batterieplatten abgespeichert. Durch die Wahl der Plattenzahl von 1 bis 16 und eines Nenn-Entladestromes lassen sich praktisch alle aus dieser Plattenbauart herstellbaren Zellen abdecken. Batterien haben je nach Art ihres elektrochemischen Systems zur Speicherung elektrischer Energie verschiedene Zellspannungen. Die Nennspannung einer Zelle beträgt beispielsweise bei Nickel-Cadmium-Batterien (Akkumulatoren) 1,2 V und bei Blei-Batterien 2,0 V. Diese Nennspannung reicht nur geringfügig von der Leerlaufspannung ab.

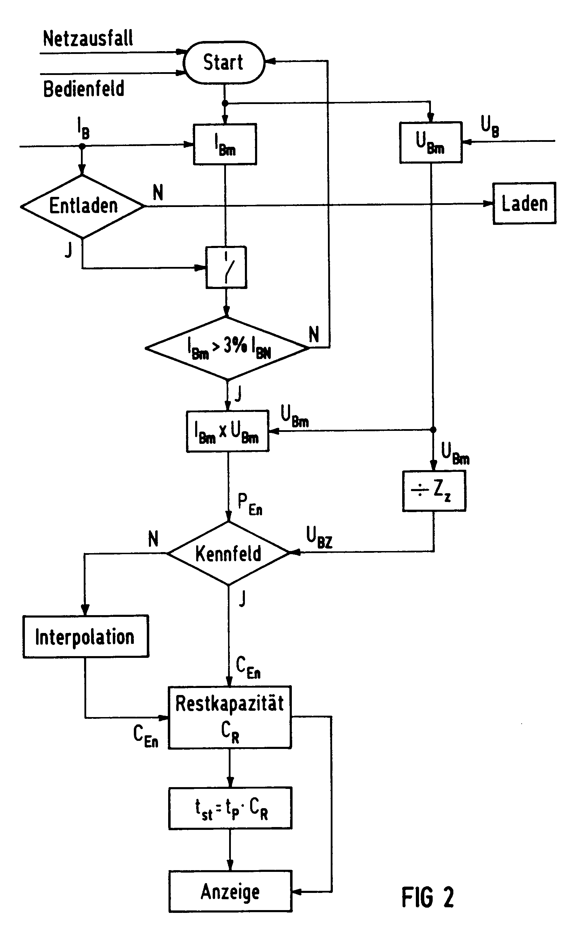

Anhand des Ablaufdiagramms gemäß Figur 2 soll nun das erfindungsgemäße Verfahren näher erläutert werden. Das Verfahren wird bei einem Netzausfall oder manuell vom Bedienfeld der unterbrechungsfreien Stromversorgung gestartet. Zunächst werden die bereitgestellten Istwerte von Batteriestrom I_{B} und Batteriespannung U_{B} gemittelt. Aus der Richtung des Istwertes des Batteriestromes I_{B} wird festgestellt, ob sich die Batterie 4 im Lade- oder Entladebetrieb L_{A} oder Eₙ befindet. Liegt der Entladebetrieb Eₙ vor, so wird das Verfahren derart weitergeführt, daß festgestellt wird, ob der gemittelte Istwert des Batteriestromes I_{Bm} größer als 3 % des Nennbatteriestromes I_{BN} ist. Ist dies der Fall, so werden die Istwerte vom gemittelten Batteriestrom I_{Bm} und von gemittelter Batteriespannung U_{Bm} miteinander multipliziert, so daß ein Istwert einer Entladeleistung P_{En} zur Verfügung steht. Dieser Istwert der Entladeleistung P_{En} bestimmt aus den Entladeleistungs-Kennlinienscharen eine Entladeleistungs-Kennlinie P_{EnZ} mit deren Hilfe und mit Hilfe des gemittelten Zellspannungs-Istwertes U_{BZ} die bereits entnommene Kapazität C_{En} bestimmt wird. Den Istwert der Zellspannung U_{BZ} erhält man aus dem Istwert der gemittelten Batteriespannung U_{Bm}, indem dieser Wert durch die Zellenzahl Z_{z} der Batterie 4 dividiert wird. Kann keine Entladeleistungs-Kennlinie P_{EnZ} aus der Entladeleistungs-Kennlinienschar ermittelt werden, so wird mittels Interpolation die entnommene Kapazität C_{En} bestimmt. Den Betriebszustand bzw. die Restkapazität C_{R} der Batterie 4 erhält man dadurch, daß von der maximalen Kapazität Cₘₐₓ der Batterie 4 die aus dem Vergleich gewonnene entnommene Kapazität C_{En} subtrahiert wird. Diese Restkapazität C_{R} kann mittels der Anzeigevorrichtung 20 zur Anzeige gebracht werden. Da dieser Wert allein nicht genügend aussagefähig ist, wird noch die Bereitschaft bzw. die Stützzeit t_{St} der Batterie 4 berechnet. Dazu wird aus dem Speicher 18 zum berechneten Istwert der Entladeleistung P_{En} eine Entladezeit t_{P} entnommen. Diese Entladezeit t_{P} wird mit der ermittelten Restkapazität C_{R} multipliziert, wodurch man die Stützzeit t_{St} erhält. Auch dieser Wert kann zusammen mit der Restkapazität C_{R} oder alleine angezeigt werden.

Anhand der in Figur 3 dargestellten Entladeleistungs-Kennlinienschar und einem Zahlenbeispiel soll gezeigt werden, wie einfach es ist, den Betriebszustand C_{R} und die Bereitschaft t_{St} der Batterie 4 zu ermitteln. Die Batterie 4 besteht aus 192 Zellen, wodurch die Batterie 4 eine Nennspannung U_{BN} von 384V aufweist. Bei dieser Batterie 4 beträgt die Entladeschlußspannung U_{BES} 307V. Da noch die Möglichkeit eines Spannungsabfalls der Batteriezuleitung berücksichtigt werden soll, beispielsweise ein Spannungsabfall von 8V bei Nennstrom, ist die Entladeschlußspannung U_{BES} = 315V bzw. mit einer Zellspannung U_{BZ} = 1,64V. Dem Mikroprozessor 16 werden nun Istwertes des Batteriestromes I_{B} und der Batteriespannung U_{B} zugeführt, die gemittelt folgende Werte ergeben:
I_{Bm1} = 5,3A, U_{Bm1} = 365V, U_{BZ1} = 1,9V
I_{Bm2} = 22,2A, U_{Bm2} = 346V, U_{BZ2} = 1,8V.

Diese Indizes 1 und 2 bedeuten, daß zwei verschiedene Belastungen für die Batterie 4 für dieses Zahlenbeispiel angenommen sind. Daraus berechnet der Mikroprozessor 16 den Istwert der Entladeleistung P_{En1} = 1,935kW bzw. P_{En2} = 7,681kW und die Entladeleistung pro Batteriezelle P_{EnZ1} = 10,07W bzw. P_{EnZ2} = 40W. Mit dem Wert der Entladeleistung pro Batteriezelle ist eine bestimmte Entladeleistungs-Kennlinie aus dem abgespeicherten Kennfeld bestimmt worden. Nun wird der Istwert der Zellspannung U_{BZ1} = 1,9V bzw. U_{BZ2} = 1,8V mit der Entladeleistungs-Kennlinie 10 W/60 min. bzw. 40 W/10 min. verglichen. Der Schnittpunkt S1 bzw. S2 gibt an, wieviel der maximalen Kapazität Cₘₐₓ = 1 bzw. Cₘₐₓ = 100 % bereits entnommen ist. Im Falle 1 ist die entnommene Kapazität C_{En1} = 63 % und im Fall 2 ist die entnommene Kapazität C_{En2} = 72 %. Die Restkapazität C_{R1} bzw. C_{R2} ergibt sich zu C_{R1} = Cₘₐₓ - C_{En1} = 1 - 0,63 = 0,37 = 37 % bzw. C_{R2} = Cₘₐₓ - C_{En2} = 1 - 0,72 = 0,28 = 28 %. Diese Restkapazität C_{R1} bzw. C_{R2} steht für eine Stützzeit t_{St1} bzw. t_{St2} zur Verfügung. Da mit der Entladeleistung pro Zelle auch die maximale Entladezeit t_{P1} bzw. t_{P2} bekannt ist, kann man mittels der Restkapazität C_{R1} bzw. C_{R2} auch die dazugehörige Stützzeit t_{St1} bzw. t_{St2} berechnen. Die Stützzeit t_{St1} bzw. t_{St2} ergibt sich zu t_{St1} = t_{P1} C_{R1} = 60 min. 0,37 = 22,2 min. bzw. t_{St2} = t_{P2} C_{R2} = 10 min. 0,28 = 2,8 min.. Die Werte der Restkapazität C_{R1} bzw. C_{R2} bzw. der Stützzeit t_{St1} bzw. t_{St2} können einzeln oder gemeinsam mittels der Anzeigevorrichtung 20 dargestellt werden.

Anhand der in Figur 4 dargestellten Entladeleistungs-Kennlinienschar und einem Zahlenbeispiel wird der Batterietest näher erläutert. Die Batterie wird in den Betriebszustand "Entladen" versetzt. Zu einem Zeitpunkt T1 stehen folgende gemittelte Istwerte von Batteriestrom I_{Bm} und Batteriespannung U_{Bm} bereit:
I_{Bm1} = 10,28A, U_{Bm1} = 373,5V, U_{BZ1} = 1,945V.

Mittels dieser Werte erhält man folgende Entladeleistung:
P_{En1} = 3,849kW, P_{EnZ1} = 20W.

Mittels der Entladeleistungs-Kennlinie P_{EnZ1} = 20 W/30 min. erhält man folgende Restkapazität C_{R1} und folgende Stützzeit t_{St1}:
C_{En1} = 30 %, C_{R1} = 70 %, t_{St1} = 21 min..

Nach einer Zeitspanne t_{A} = 2,5 min. zum Zeitpunkt T2 werden wieder die Istwerte von Batteriestrom I_{B} und Batteriespannung U_{B} gemessen und gemittelt:
I_{Bm2} = 10,42A, U_{Bm2} = 368,5V, U_{BZ2} = 1,92V.

Mittels dieser Werte erhält man folgende Entladeleistung:
P_{En2} = 3,84kW, P_{EnZ2} = 20W.

Mittels der Entladeleistungs-Kennlinie P_{EnZ2} = 20 W/30 min. erhält man folgende Restkapazität C_{R2} und folgende Stützzeit t_{St2}:
C_{En2} = 42 %, C_{R2} = 58 %, t_{St2} = 17,4 min..

Wenn man nun die Stützzeiten t_{St1} und t_{St2} voneinander subtrahiert, erhält man als Differenzwert t_{diff} = 3,6 min.. Ein Vergleich mit der vorbestimmten Zeitspanne t_{A} = 2,5 min. zeigt, daß der Differenzwert t_{diff} = 3,6 min. erheblich größer ist.

Selbst wenn ein Toleranzband von ± 10 % zugelassen wird, so befindet sich der ermittelte Differenzwert t_{diff} = 3,6 min. außerhalb des Toleranzbandes. Das bedeutet, daß die Batterie 4 bereits geschädigt ist.

Für eine Batterie 4, die in Ordnung ist, müssen sich nach einer Zeitspanne t_{A} = 2,5 min. ausgehend vom Zeitpunkt T1 folgende Werte einstellen (Zeitpunkt T3):
I_{Bm3} = 10,37A, U_{Bm3} = 370,2V, U_{BZ3} = 1,928V
P_{En3} = 3,84kW, P_{EnZ3} = 20W
C_{En3} = 38,5 %, C_{R3} = 61,5 %, t_{St3} = 18,45 min.
t_{diff} = t_{St1} - t_{St3} = 21 min. - 18,45 min. = 2,55 min.

Der Differenzwert t_{diff} = 2,55 min. befindet sich innerhalb des Toleranzbandes von ± 10 % bezogen auf die vorbestimmte Zeitspanne t_{A} = 2,5 min..

Somit kann man mittels des erfindungsgemäßen Verfahrens jederzeit auf einfache Weise eine Batterie 4 einer unterbrechungsfreien Stromversorgung testen, wodurch eine geschädigte Batterie 4 ausgetauscht kann.

## Patentansprüche

1. Verfahren zur Überwachung einer aus mehreren Batteriezellen bestehenden Batterie (4) auf ihren Betriebszustand (C_{R}) und ihre Bereitschaft (t_{St}), wobei bereitgestellte Istwerte von Batteriestrom (I_{B}) und Batteriespannung (U_{B}) gemittelt werden und aus der Richtung des Batteriestromes (I_{B}) die Betriebsart (L_{A}, Eₙ) festgestellt wird, **dadurch gekennzeichnet**, daß bei Vorliegen des Entladebetriebes (Eₙ) aus den gemittelten Istwerten von Batteriestrom (I_{Bm}) und Batteriespannung (U_{Bm}) eine Entladeleistung (P_{En}) und eine auf eine Batteriezelle bezogene Entladeleistung (P_{ENZ}) berechnet werden, daß in Abhängigkeit dieser bezogenen Entladeleistung (P_{ENZ}) eine Kennlinie aus den abgespeicherten Entladeleistungs-Kennlinienscharen bestimmt wird, daß in Abhängigkeit des gemittelten ZellspannungsIstwertes (U_{BZ}) und der bestimmtenKennlinie ein Wert der von der maximalen Kapazität (Cₘₐₓ) entnommenen Kapazität (C_{En}) bestimmt wird, daß zur Berechnung eines Wertes der Restkapazität (C_{R}) dieser ermittelte Wert der entnommenen Kapazität (C_{En}) von der maximalen Kapazität (Cₘₐₓ) subtrahiert wird und daß zur Bestimmung der Bereitschaft (t_{St}) diese ermittelte Restkapazität (C_{R}) als eine auf die maximale Kapazität (Cₘₐₓ) bezogene Größe mit einer zur ermittelten Kennlinie gehörenden maximalen Entladezeit (tₚ) multipliziert wird.

2. Verfahren nach Anspruch 1, **dadurch gekennzeichnet**, daß die Batterie (4) in die Betriebsart "Entladen" versetzt wird, daß zu zwei verschiedenen Zeitpunkten (T1, T2 bzw. T1, T3) die Bereitschaft (t_{St1}, t_{St2} bzw. t_{St1}, t_{St3}) der Batterie (4) ermittelt wird, wobei eine vorbestimmte Zeitspanne (t_{A}) zwischen zwei Zeitpunkten (T1, T2 bzw. T1, T3) vorgesehen ist, und daß die beiden ermittelten Bereitschaften (t_{St1}, t_{St2} bzw. t_{St1}, t_{St3}) voneinander subtrahiert werden und dieser Differenzwert (t_{diff}) derart mit der vorbestimmten Zeitspanne (t_{A}) verglichen wird, daß, wenn der Differenzwert (t_{diff}) außerhalb eines vorbestimmten Toleranzbandes der Zeitspanne (t_{A}) liegt, die Batterie als geschädigt erkannt wird.

3. Schaltungsanordnung (14) zur Durchführung des Verfahrens nach Anspruch 1, wobei mittels eines Gleichstrommeßgebers (12) ein Batteriestrom (I_{B}) und mittels eines Meßgliedes eine Batteriespannung (U_{B}) einer aus mehreren Batteriezellen bestehende Batterie (4) ermittelt werden, **dadurch gekennzeichnet**, daß diese Schaltungsanordnung (14) einen Mikroprozessor (16), einen Speicher (18) und eine Anzeigevorrichtung (20) enthält, wobei dem Mikroprozessor (16) die Istwerte von Batteriestrom (I_{B}) und Batteriespannung (U_{B}) zugeführt sind, der Mikroprozessor (16) die Entladeleistung (P_{EN}) und die auf eine Batteriezelle bezogene Entladeleistung (P_{ENZ}) bestimmt, wobei in Abhängigkeit dieser bezogenen Entladeleistung (P_{ENZ}) aus dem Speicher (18) eine Entladeleistungs-Kennlinie ermittelt wird, wobei der Mikroprozessor (16) in Abhängigkeit einer vorbestimmten Zellspannung (U_{BZ}) aus der ermittelten Kennlinie den Betriebszustand (C_{R}) bestimmt und die Bereitschaft (t_{St}) der Batterie (4) berechnet und mittels der Anzeigevorrichtung (20) anzeigt.

4. Schaltungsanordnung (14) nach Anspruch 3, **dadurch gekennzeichnet**, daß als Entladeleistungs-Kennlinienscharen die Zellspannung (U_{BZ}) über der entnehmbaren Kapazität (C_{En}) bei konstanter Leistung bzw. Zeit als Parameter abgespeichert sind.

5. Schaltungsanordnung (14) nach Anspruch 3 für eine unterbrechungsfreie Stromversorgungsaniage, bestehend aus einem Gleichrichter (2), einer Batterie (4), einem Wechselrichter (6), einer Netzrückschalteinrichtung (8) und einer Steuer- und Regeleinrichtung (10), **dadurch gekennzeichnet** daß die Schaltungsanordnung (14) zur Durchführung des Verfahrens zur Überwachung einer Batterie (4) auf ihren Betriebszustand (C_{R}) und ihre Bereitschaft (t_{St}) in die Steuer- und Regeleinrichtung (10) der unterbrechungsfreien Stromversorgungsanlage integriert ist.

## Claims

1. Method for monitoring a battery (4) consisting of several battery cells for its operating state (C_{R}) and its stand-by (t_{St}), whereby prepared actual values of battery current (I_{B}) and battery voltage (U_{B}) are averaged and from the direction of the battery current (I_{B}) the operating mode (L_{A}, Eₙ) is ascertained, characterized in that with the presence of the discharging operation (Eₙ) from the averaged actual values of battery current (I_{Bm}) and battery voltage (U_{Bm}) a discharge power (P_{En}) and a discharge power (P_{ENZ}) related to a battery cell are calculated, in that in dependence upon this related discharge power (P_{ENZ}) a characteristic is determined from the stored discharge-power families of characteristics, in that in dependence upon the averaged actual cell voltage value (U_{BZ}) and the determined characteristic a value of the capacitance (C_{En}) taken from the maximum capacitance (Cₘₐₓ) is determined, in that to calculate a value of the residual capacitance (C_{R}) this determined value of the capacitance (C_{En}) taken is subtracted from the maximum capacitance (Cₘₐₓ) and in that to determine the stand-by (t_{St}) this determined residual capacitance (C_{R}) is multiplied as a variable related to the maximum capacitance (Cₘₐₓ) with a maximum discharge time (tₚ) belonging to the determined characteristic.

2. Method according to claim 1, characterized in that the battery (4) is moved into the operating mode "discharging", in that at two different instants (T1, T2 and T1, T3) the stand-by (t_{St1}, t_{St2} and t_{St1}, t_{St3}) of the battery (4) is determined, whereby a predetermined period (t_{A}) is provided between two instants (T1, T2 and T1, T3) and in that the two determined states of stand-by (t_{St1}, t_{St2} and t_{St1}, t_{St3}) are subtracted from one another and this differential value (t_{diff}) is compared with the predetermined period (t_{A}) in such a way that if the differential value (t_{diff}) lies outside a predetermined tolerance band of the period (t_{A}) the battery is recognized as damaged.

3. Switching arrangement (14) for carrying out the method according to claim 1, whereby by means of a d.c. transducer (12) a battery current (I_{B}) is determined and by means of a measuring element a battery voltage (U_{B}) of a battery (4) consisting of several battery cells is determined, characterized in that this switching arrangement (14) contains a microprocessor (16), a memory (18) and a display device (20), whereby the actual values of battery current (I_{B}) and battery voltage (U_{B}) are supplied to the microprocessor (16), the microprocessor (16) determines the discharge power (P_{EN}) and the discharge power (P_{ENZ}) related to a battery cell, whereby in dependence upon this related discharge power (P_{ENZ}) a discharge-power characteristic is determined from the memory (18), whereby the microprocessor (16) determines in dependence upon a predetermined cell voltage (U_{BZ}) from the determined characteristic the operating state (C_{R}) and calculates the stand-by (t_{St}) of the battery (4) and displays it by means of the display device (20).

4. Switching arrangement (14) according to claim 3, characterized in that as discharge-power families of characteristics the cell voltage (U_{BZ}) is stored over the removable capacitance (C_{En}) with constant power and time as parameters.

5. Switching arrangement (14) according to claim 3 for an uninterruptable power system, consisting of a rectifier (2), a battery (4), an inverter (6), a static bypass switch (8) and a control and regulating device (10), characterized in that the switching arrangement (14) for carrying out the method for monitoring a battery (4) for its operating state (C_{R}) and its standby (t_{St}) is integrated into the control and regulating device (10) of the uninterruptable power system.

## Revendications

1. Procédé de contrôle de l'état de fonctionnement (C_{R}) et l'état de disponibilité (t_{St}) d'une batterie (4) constituée de plusieurs éléments, selon lequel on forme la moyenne des valeurs réelles préparées du courant (I_{B}) et de la tension (U_{B}) de la batterie et on détermine le type de fonctionement (L_{A}, Eₙ) à partir du sens du courant (I_{B}) de la batterie, caractérisé par le fait que dans le cas de l'opération de décharge (Eₙ), on calcule une puissance de décharge (P_{En}) et une puissance de décharge (P_{ENZ}) rapportée à un élément de la batterie à partir des moyennes des valeurs réelles du courant (I_{Bm}) et de la tension (U_{Bm}) de la batterie, on détermine une courbe caractéristique, en fonction de cette puissance de décharge rapportée (P_{ENZ}) à partir de l'ensemble mémorisé des courbes caractéristiques de la puissance de décharge, on détermine une valeur de la capacité (C_{En}) prélevée de la capacité maximale (Cₘₐₓ) en fonction de la moyenne de la valeur réelle (U_{BZ}) de la tension d'un élément et de la courbe caractéristique déterminée, que pour le calcul d'une valeur de la capacité résiduelle (C_{R}), on soustrait cette valeur déterminée de la capacité prélevée (C_{En}), de la capacité maximale (Cₘₐₓ) et que pour la détermination de l'état de disponibilité (t_{St}), on multiplie cette capacité résiduelle déterminée (C_{R}) en tant que grandeur rapportée à la capacité maximale (Cₘₐₓ), par une durée maximale de décharge (tₚ), associée à la courbe caractéristique déterminée.

2. Procédé suivant la revendication 1, caractérisé par le fait qu'on place la batterie (4) dans l'état de fonctionnement "décharge", qu'on détermine l'état de disponibilité (t_{St1}, t_{St2} ou t_{St1}, t_{St3}) de la batterie (4) à deux instants différents (T1,T2 ou T1,T3), un intervalle de temps prédéterminé (t_{A}) étant prévu entre deux instants (T1, T2 ou T1,T3), et on soustrait les deux états de disponibilité déterminés (t_{St1}, t_{St2} ou t_{St1}, t_{St3}) l'un de l'autre et on compare cette valeur de différence (tdiff) à l'intervalle de temps prédéterminé (t_{A}) de telle sorte que lorsque la valeur de différence (t_{diff}) se situe en dehors d'une plage prédéterminée de tolérances de l'intervalle de temps (t_{A}), on identifie la batterie comme étant endommagée.

3. Montage (14) pour la mise en oeuvre du procédé suivant la revendication 1, dans lequel un courant (I_{B}) d'une batterie (4) constituée de plusieurs éléments est déterminé au moyen d'un transmetteur (12) de mesure du courant continu et une tension (U_{B}) de cette batterie est déterminée au moyen d'un circuit de mesure, caractérisé par le fait que ce montage (14) contient un microprocesseur (16), une mémoire (18) et un dispositif d'affichage (20), les valeurs réelles du courant (I_{B}) et de la tension (U_{B}) de la batterie étant envoyées au microprocesseur (16), et le microprocesseur (16) déterminant la puissance de décharge (P_{EN}) et la puissance de décharge (P_{ENZ}) rapportée à un élément de la batterie, tandis qu'une courbe caractéristique de puissance de décharge est déterminée en fonction de cette puissance de décharge rapportée (P_{ENZ}) à partir de la mémoire (18), et que le microprocesseur (16) détermine l'état de fonctionnement (C_{R}) à partir de la courbe caractéristique déterminée, en fonction d'une tension prédéterminée (U_{BZ}) de l'élément et calcule l'état de disponibilité (t_{St}) de la batterie (4) et l'affiche au moyen du dispositif d'affichage (20).

4. Montage (14) suivant la revendication 3, caractérisé par le fait que comme ensembles de courbes caractéristiques de puissance de décharge, la tension (U_{BZ}) de l'élément est mémorisée en fonction de la capacité (C_{En}) pouvant être prélevée, pour une puissance constante ou un temps constant, en tant que paramètre.

5. Montage (14) suivant la revendication 3 pour une installation d'alimentation en courant sans interruption, constituée d'un redresseur (2), d'une batterie (4), d'un onduleur (6), d'un dispositif (8) de commutation en retour du réseau et d'un dispositif de commande et de régulation (10), caractérisé par le fait que le montage (14) pour la mise en oeuvre du procédé de contrôle de l'état de fonctionnement (C_{R}) et de l'état de disponibilité (t_{St}) d'une batterie (4) est intégré dans le dispositif de commande et de régulation (10) de l'installation d'alimentation en courant sans interruption.
